# EUROPÄISCHE PATENTSCHRIFT

(11) **EP 1 692 019 B1**
(45) Veröffentlichungstag und Bekanntmachung des Hinweises auf die Patenterteilung: **30.01.2008**
(21) Anmeldenummer: 04802836.9
(22) Anmeldetag: 26.11.2004
(51) Int. Cl.: B60R 21/04

(54) **CABRIOLET-FAHRZEUG**
CABRIOLET VEHICLE
VEHICULE CABRIOLET

(30) Priorität: 06.12.2003 DE 10357100
(43) Veröffentlichungstag der Anmeldung: 23.08.2006
(73) Patentinhaber: Wilhelm Karmann GmbH, 49084 Osnabrück (DE)
(72) Erfinder: LIEDMEYER, Petra, 49509 Recke (DE); WILLENBORG, Uwe, 49080 Osnabrück (DE); BAHLMANN, Norbert, 4900 Osnabrück (DE)
(86) Internationale Anmeldenummer: PCT/DE2004/002627
(87) Internationale Veröffentlichungsnummer: WO 2005/056347

(56) Entgegenhaltungen:
- DE-A1- 10 159 278
- DE-B- 1 282 494
- DE-U1- 29 611 683
- US-A1- 2002 089 152

## Beschreibung

Die Erfindung betrifft ein Cabriolet-Fahrzeug mit zumindest einem in den Insassenraum vorragenden Dachabschnitt nach dem Oberbegriff des Anspruchs 1 sowie ein zugehöriges Fahrzeugdach.

Es sind Cabriolet-Fahrzeuge bekannt, die einen an einem metallischen Dachgestell gehaltenen flexiblen Dachbezug aufweisen, wobei der Bezug im vorderen Bereich über eine tragende Querstruktur, häufig auch als Dachspitze bezeichnet, gespannt ist. Eine solche Dachspitze kann beispielsweise aus mehreren einzelnen Trägern oder einer Druckgußstruktur, etwa aus einer Leichtmetallegierung oder einem metallischen Schaum, mit einer oberen und einer unteren Schale bestehen. Die Dachspitze kann neben der Spannfunktion auch als Träger von Verriegelungsteilen des Daches am Windschutzscheibenrahmen und bei zumindest halbautomatischen Dächern auch von Bedienelementen für diese dienen. In jedem Fall ragt dieser Dachabschnitt gegenüber einer nachfolgenden Dachfläche weiter nach unten in den Innenraum und bildet somit insbesondere für groß gewachsene Insassen ein Anprallrisiko bei Unfällen. Dies gilt vor allem für sportliche Fahrzeuge wie etwa zweisitzige Roadster, bei denen die Windschutzscheibe sehr stark geneigt ist und das Dach insgesamt niedrig ist. Bei derartigen Platzverhältnissen ist es daher auch besonders schwierig, ein möglichst geringes Außenmaß der Dachspitze mit einer Aufnahme von Verriegelungselementen zu vereinbaren.

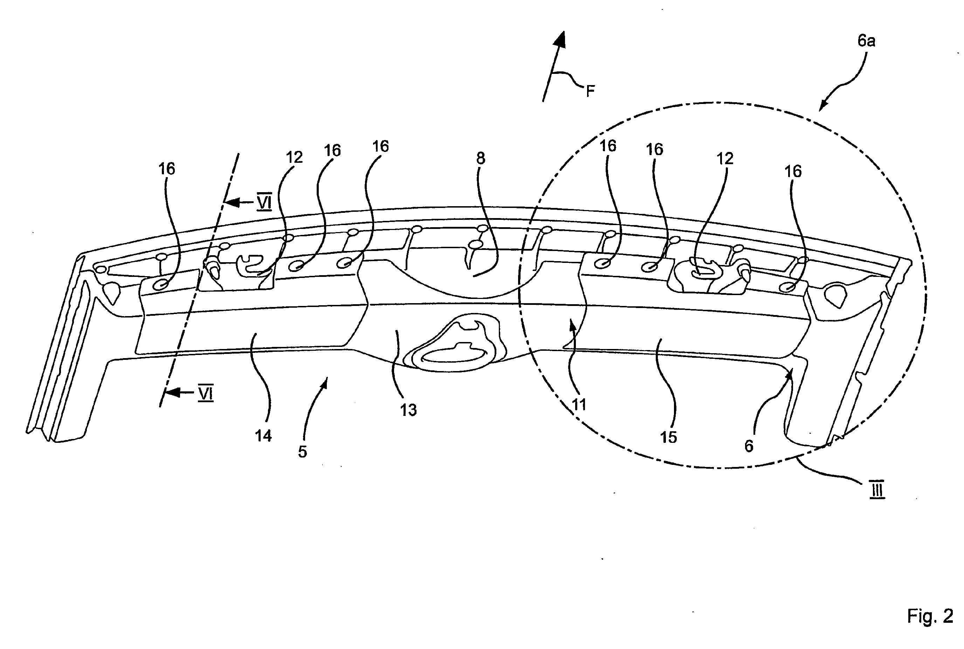

Der DE 101 59 278 A1 ist die Anordnung von Airbags in Rahmenteilen eines beweglichen Fahrzeugdachs zu entnehmen, wobei neben den ausführlich abgehandelten Längsrahmenteilen auch eine Anordnung an einem vorderen Querspriegel angesprochen wird. Eine solche Anordnung bedingt jedoch, wie dies der dortigen Figur 2 zu entnehmen ist, eine Anordnung des eingefalteten Airbags und seiner Auslöseeinheit unmittelbar hinter der äußeren Verkleidung 1, um damit die Erstreckung dieser Baueinheit in den Fahrzeuginnenraum gering halten zu können. Gerade bei flachen Fahrzeugen mit niedrigen und/oder flach stehenden Windschutzscheiben ist die Erstreckung in Richtung Fahrzeuginnenraum eine kritische Größe, weil ein zu voluminöser Querträger am vorderen Dachende die Ästhetik, die Kopffreiheit und die Sicht nach vorne erheblich stören kann. Zudem ist eine solche Lösung sehr kostenaufwendig und durch die Sprengkraft der Airbagauslösungen nahe am Kopf gefährlich, insbesondere bei einem sportlichen Fahrzeug, wie einem Roadster, bei dem nur wenig Weg zwischen dem Kopfraum der Insassen und dem Windschutzscheibenrahmen verbleibt.

Der Erfindung liegt das Problem zugrunde, bei einem Cabriolet-Fahrzeug der genannten Art die Sicherheit zu verbessern.

Die Erfindung löst dieses Problem durch ein Cabriolet-Fahrzeug mit den Merkmalen des Anspruchs 1 sowie durch ein bewegliches Fahrzeugdach mit den Merkmalen des Anspruchs 11. Hinsichtlich weiterer vorteilhafter Ausgestaltungen der Erfindung wird auf die Ansprüche 2 bis 10 verwiesen.

Durch die Erfindung ist die Unfallsicherheit für die Insassen verbessert, da der in den Insassenraum ragende Dachabschnitt aufgrund der Deformierbarkeit der Abdeckungen an diesen Stellen nachgiebig ausgebildet und somit entschärft ist. Insbesondere kann der hinter den Abdeckungen liegende Hohlraum eine weite Deformation bei einem Kopfanprall zulassen.

Wenn anstelle einer durchgehenden Ausnehmung zwei symmetrisch zu einer vertikalen Längsmittelebene liegende Ausnehmungen vorgesehen sind, kann für Fahrer und Beifahrer die gleiche Sicherheit geschaffen werden und dennoch die Stabilität der Dachspitze durch einen dazwischen mittig verbleibenden starren Bereich verbleiben, der beispielsweise auch geeignet ist, einen - eventuell manuell bedienbaren - Ver- und Entriegelungshebel aufzunehmen.

Mit einer Mindestbreite der deformierbaren Abdeckungen von fünfundzwanzig, vorteilhaft auch weit über dreißig Zentimetern, kann auch bei einer Schrägkollision ein hinreichend großer möglicher Kopfanprallbereich entschärft werden.

Wenn durch die geöffneten Ausnehmungen hindurch Teile zur Verriegelung der Dachspitze an dem Windschutzscheibenrahmen, insbesondere seitliche Fanghaken, montierbar sind, ist die Herstellung eines solchen Daches vereinfacht. Zudem kann die Dachspitze in ihren Ausmaßen sehr klein gehalten werden, da die Zugänglichkeit durch die geöffneten Ausnehmungen erleichtert ist und keine großen dauerhaften Montageräume vorgesehen werden müssen. Dadurch ist die Sicherheit weiter verbessert.

Weitere Vorteile und Merkmale der Erfindung ergeben sich aus einem in der Zeichnung schematisch dargestellten sowie nachfolgend beschriebenen und abwandelbaren Ausführungsbeispiel des Gegenstandes der Erfindung.

In der Zeichnung zeigt:

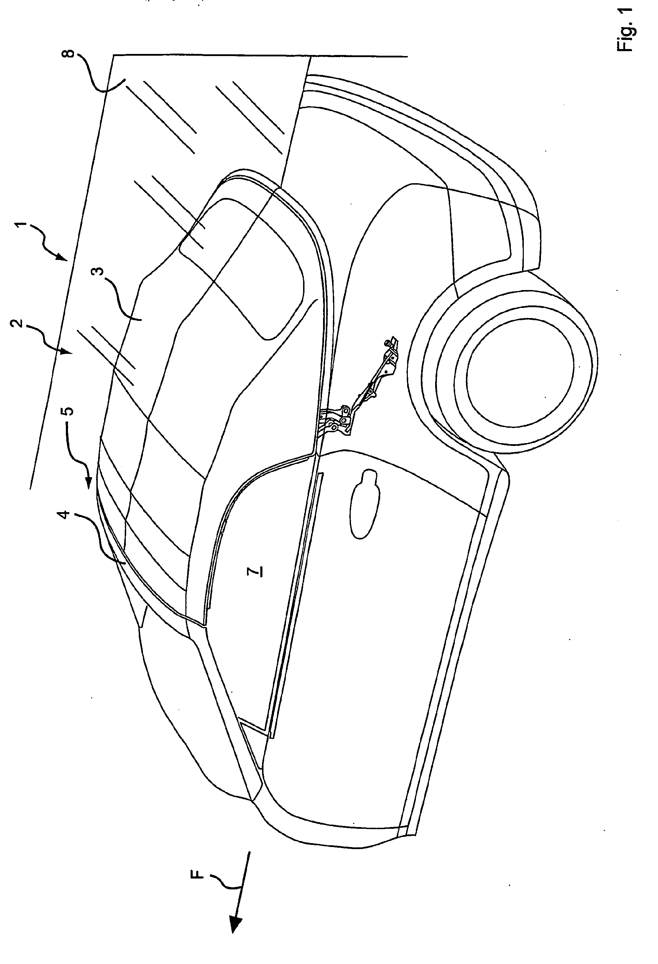

- Fig. 1: einen mittleren Bereich eines erfindungsgemäßen Cabriolet-Fahrzeugs in schematischer, teilweise abgebrochener perspektivischer Ansicht bei vollständig geschlossenem Dach,
- Fig. 2: eine perspektivische Einzelteilansicht der Dachspitze von schräg vorne gesehen mit zwei symmetrischen Ausnehmungen und montierten Abdeckungen,

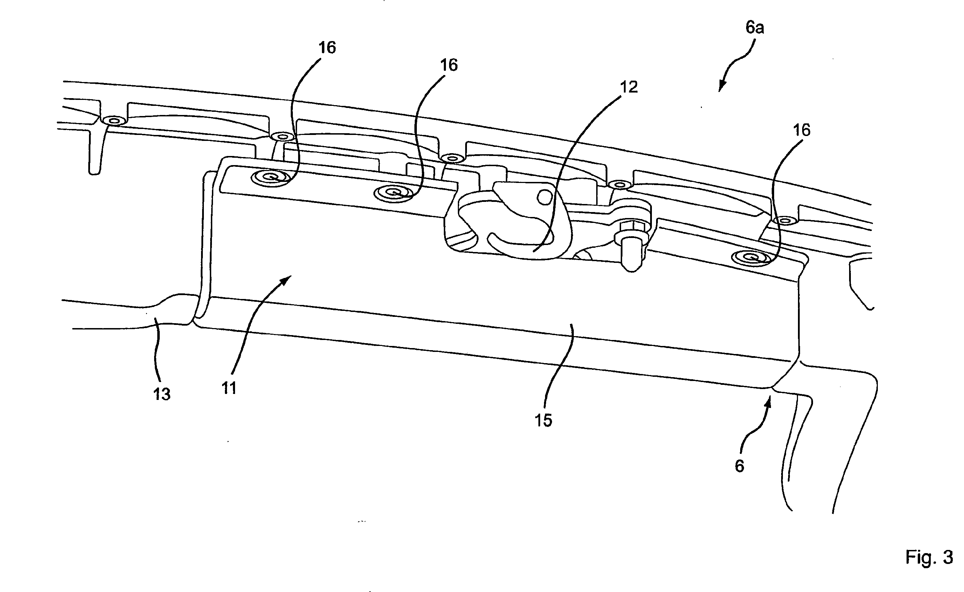

- Fig. 3: das Detail III in Fig. 2,

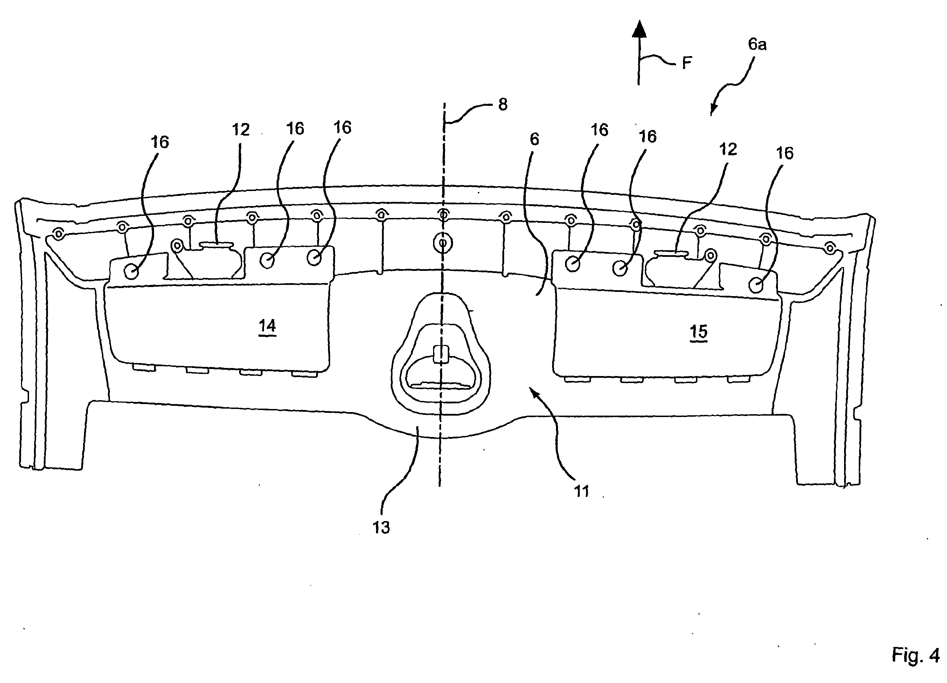

- Fig. 4: die Dachspitze nach Fig. 2 von unten gesehen,
- Fig. 5: eine ähnliche Ansicht wie Fig. 4 vor Montage der Abdeckungen,
- Fig. 6: einen Schnitt entlang der Linie VI-VI in Fig. 2 bei geschlossenem Dach mit auf dem Windschutzscheibenrahmen aufliegender Dachspitze.

Das erfindungsgemäße Cabriolet-Fahrzeug 1 kann sowohl ein Zweisitzer als auch ein Cabriolet-Fahrzeug mit einem größeren Innenraum und etwa zwei Sitzreihen hintereinander sein.

Es umfaßt ein bewegliches Dach 2, das im Ausführungsbeispiel einen flexiblen Dachbezug 3 aufweist, was nicht zwingend ist. Im gezeichneten Ausführungsbeispiel erstreckt sich der Bezug 3 über das gesamte bewegliche Dach 2, das im geschlossenen Zustand an einem Windschutzscheibenrahmen 4 verriegelbar ist. Die Erfindung ist neben dem gezeigten Vollcabriolet-Fahrzeug auch auf ein Teilcabriolet-Fahrzeug anwendbar, bei dem sich etwa im hinteren Fahrzeugbereich ein karosseriefester Dachteil befindet und nur der vor diesem liegende Dachteil beweglich ist.

Sowohl bei einem durchgehenden Bezug 3 als auch bei teilweise ausgebildeten starren Dachteilen ist im in Fahrtrichtung F vorderen Bereich 5 des Daches 2 ein Abschnitt 6 vorgesehen, der weiter in den Insassenraum 7 ragt als eine dahinter liegende Dachfläche, die im Ausführungsbeispiel durch die Innenseite des Bezugs 3 selbst oder einen darunter gespannten Innenhimmel gebildet sein kann.

Der weiter in den Insassenraum 7 ragende Abschnitt 6 ist hier als Bestandteil einer insgesamt als Druckgußstruktur gefertigten Dachspitze 6a ausgebildet. Diese weist hier symmetrisch zu einer vertikalen Längsmittelebene 8 zwei Ausnehmungen 9, 10 auf, die aus einer nach innen weisenden Fläche 11 ausgenommen sind. Die Ausnehmungen 9, 10 sind mittig vor den vorderen Sitzen gelegen und weisen jeweils eine Breite von zumindest 25 cm auf, können je nach Fahrzeuggestaltung vorteilhaft auch erheblich breiter sein. Anstelle der beiden Ausnehmungen 9, 10 könnte auch eine einzelne durchgehende Ausnehmung - nicht gezeichnet - vorgesehen sein.

Die gezeigten beiden Ausnehmungen 9, 10 ermöglichen jedoch, daß mittig zwischen ihnen ein starrer Stegbereich 13 der Dachspitze 6 verbleiben kann, der hier als Träger für einen manuellen Betätigungsgriff, mit dem seitliche Fanghaken 12 des Daches 2 in oder außer Eingriff mit dem Windschutzscheibenrahmen 4 bewegbar sind. Eine halbautomatische oder vollständig manuelle Dachbetätigung, wie sie bei sportlichen Roadstern gewünscht sein kann, bleibt damit möglich.

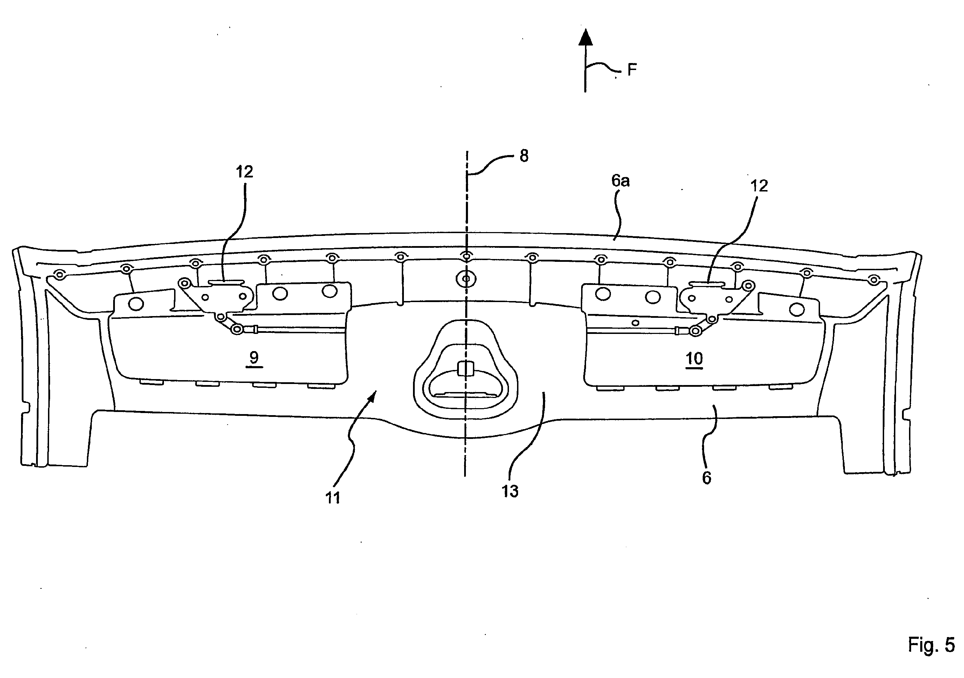

In Fig. 5 ist gezeigt, daß die Ausnehmungen 9, 10 als Montageerleichterung dienen: durch die geöffneten Ausnehmungen 9, 10 sind die seitlichen Fanghaken 12 zugänglich und können im Durchgriff durch die Ausnehmungen 9, 10 somit an der Dachspitze 6a befestigt, etwa angeschraubt, werden. Dadurch kann die Dachspitze 6a auf eine Maximierung des verbleibenden Kopfraums optimiert werden und trotz ihrer dann geringen Ausmaße normal dimensionierte Fanghaken 12 oder dergleichen Befestigungselemente zu ihrer Verriegelung am Windschutzscheibenrahmen 4 aufnehmen. Die mit den Ausnehmungen 9, 10 gebildete Montagehilfe bewirkt durch die so ermöglichte Minimierung der Dachspitze 6 gleichzeitig einen größeren Kopfraum und somit eine größere Unfallsicherheit.

Die Ausnehmungen 9, 10 sind durch Abdeckungen 14, 15 überbrückbar, das heißt nahezu oder insbesondere vollständig abdeckbar. Im montierten Zustand sind daher vom Innenraum 7 die Abdeckungen 14, 15 sichtbar; diese können daher vorteilhaft farblich auf den Innenraum 7 abgestimmt und beispielsweise textil bezogen sein. Als Material für die Abdeckungen 14, 15 kommen sowohl Kunststoffe als auch dünne metallische Bleche in Betracht. In jedem Fall sind die Abdeckungen 14, 15 bei einem eventuellen Kopfanprall von Insassen deformierbar, ohne dabei Kopfverletzungen hervorzurufen. Die Abdeckungen 14, 15 können hierfür gepolstert sein, etwa auch durch Ausschäumen. Beim Anprall wird eine nach vorne beschleunigte Person durch die Abdeckungen 14, 15 abgebremst, so daß die Airbags besser wirken können.

Um sicherzustellen, daß bei einem Unfall der Kopfanprall tatsächlich an den Abdeckungen 14, 15 erfolgt und nicht an daneben verbleibenden Bereichen der Dachspitze 6a, sollten die Abdeckungen eine erhebliche Größe haben: mindestens 70 Quadratzentimeter, vorteilhaft jedoch ein Vielfaches hiervon, sind dafür erforderlich. Im Ausführungsbeispiel hat jede Abdeckung 14, 15 Ausmaße von mehr als 30 Zentimetern Breite und 20 Zentimetern Tiefe.

Bei ihrer Montage werden die Abdeckungen 14, 15 jeweils mit ihren in Fahrtrichtung F vorgeordneten Enden, die bei geschlossenem Dach 2 auf dem Windschutzscheibenrahmen 4 aufliegen, an die Dachspitze 6a angeschraubt, so daß die Schrauben 16 bei geschlossenem Dach 2 nicht sichtbar oder zugänglich sind und die Schraubenköpfe somit keine Vergrö-ßerung des Verletzungsrisikos bieten.

An ihren entgegen der Fahrtrichtung F hinteren Enden sind die Abdeckungen 14, 15 hinter einer vorspringenden Kante 17 der Dachspitze 6 lösbar einhängbar. Um zu vermeiden, daß bei einem Kopfanprall die Abdeckungen 14, 15 von dieser Kante abgehoben und nach innen in die Ausnehmungen 9, 10 gedrückt werden, ist der Kante 17 jeweils ein Niederhalter 18 für die Abdeckungen 14, 15 vorgeordnet. Dieser hält die Abdeckungen 14, 15 in ihrer Sicherungsstellung.

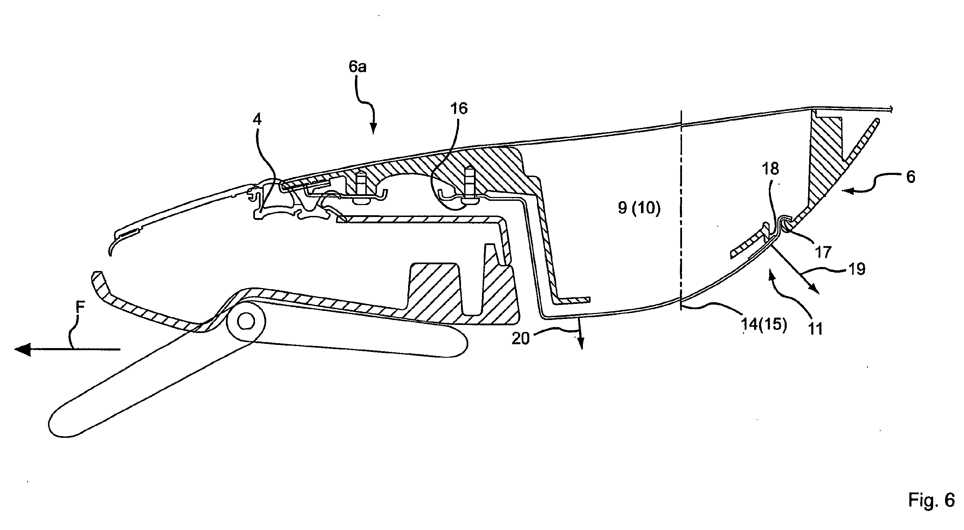

Die Ausnehmungen 14, 15 sind jeweils gewölbt, wie in Fig. 6 sichtbar ist. Dabei umfaßt ein Lot 19 der Außenflächen der Abdeckungen 14, 15 zumindest eine nach hinten und ein Lot 20 zumindest eine nach unten weisende Komponente. Somit ist sowohl ein Kopfanprall von hinten, wie er tendenziell eher bei großen Personen stattfinden kann, als auch ein Kopfanprall von unten, wie er eher bei kleineren Personen stattfinden kann, abgesichert.

## Patentansprüche

1. Cabriolet-Fahrzeug (1) mit einem Dach (2), das im geschlossenen Zustand im vorderen, an einen Windschutzscheibenrahmen (4) mittelbar oder unmittelbar angrenzenden Bereich einen gegenüber dahinter liegenden Dachbereichen weiter in den Insassenraum (7) ragenden Abschnitt (6) umfaßt,
**dadurch gekennzeichnet,**
**daß** der Abschnitt (6) an einer dem Insassenraum (7) zugewandten Fläche (11) zumindest eine von einer deformierbaren Abdeckung (14;15) zumindest überbrückbare großflächige Ausnehmung (9;10) aufweist, wobei auf der jenseitigen Seite der Abdeckung (14;15) ein Hohlraum gelegen ist, der eine weite Deformation bei einem Kopfanprall zuläßt.

2. Cabriolet-Fahrzeug (1) nach Anspruch 1
**dadurch gekennzeichnet,**
**daß** die Abdeckung (14;15) eine dem Insassenraum (7) zugewandte Fläche von zumindest 70 Quadratzentimetern umfaßt.

3. Cabriolet-Fahrzeug (1) nach einem der Ansprüche 1 oder 2,
**dadurch gekennzeichnet,**
**daß** symmetrisch zu einer vertikalen Fahrzeuglängsmittelebene (8) zwei abdeckbare Ausnehmungen (9;10) vorhanden sind.

4. Cabriolet-Fahrzeug (1) nach einem der Ansprüche 1 bis 3,
**dadurch gekennzeichnet,**
**daß** ein Lot (19;20) der Außenfläche(n) der Abdeckung(en) (14;15) jeweils zumindest über einen Teilbereich eine nach hinten und über einen Teilbereich eine nach unten weisende Komponente umfaßt.

5. Cabriolet-Fahrzeug (1) nach einem der Ansprüche 1 bis 4,
**dadurch gekennzeichnet,**
**daß** die Ausnehmung(en) (9;10) jeweils zumindest fünfundzwanzig Zentimeter breit und zehn Zentimeter tief ist oder sind.

6. Cabriolet-Fahrzeug (1) nach einem der Ansprüche 1 bis 5,
**dadurch gekennzeichnet,**
**daß** die Abdeckungen (14;15) im berechneten Kopfanprallbereich des Fahrers und/oder Beifahrers bei einer möglichen Frontalkollision an den in den Insassenraum (7) ragenden Abschnitt (6) liegen.

7. Cabriolet-Fahrzeug (1) nach einem der Ansprüche 1 bis 6,
**dadurch gekennzeichnet,**
**daß** durch die geöffneten Ausnehmungen (9;10) hindurch Teile der Verriegelung der Dachspitze (6) an dem Windschutzscheibenrahmen (4), insbesondere seitliche Fanghaken (12), montierbar sind.

8. Cabriolet-Fahrzeug (1) nach einem der Ansprüche 1 bis 7,
**dadurch gekennzeichnet,**
**daß** die Abdeckung(en) (14;15) jeweils mit einem in Fahrtrichtung (F) vorgeordneten Ende, das bei geschlossenem Dach (2) auf dem Windschutzscheibenrahmen (4) aufliegt, mit der Dachspitze (6a) verschraubt ist oder sind.

9. Cabriolet-Fahrzeug (1) nach einem der Ansprüche 1 bis 8,
**dadurch gekennzeichnet,**
**daß** die Abdeckung(en) (14;15) einem entgegen der Fahrtrichtung (F) hinteren Ende hinter zumindest einem Vorsprung (17) der Dachspitze (6a) lösbar einhängbar ist oder sind.

10. Cabriolet-Fahrzeug (1) nach Anspruch 9,
**dadurch gekennzeichnet,**
**daß** dem Vorsprung (17) ein Niederhalter (18) für die Abdeckung (14;15) vorgeordnet ist, der deren Hochdrücken hemmt.

11. Bewegliches Fahrzeugdach (2) für ein Cabriolet-Fahrzeug (1) nach einem der Ansprüche 1 bis 10.

## Claims

1. A cabriolet vehicle (1) with a roof (2) which, in the closed state, in the front area which borders indirectly or directly on a windscreen frame (4), includes a portion (6) which projects further into the passenger space (7) in relation to roof areas situated behind it,
**characterised in that**
the portion (6), at a surface (11) which faces the passenger space (7), has at least one large-surface recess (9; 10) which can be bridged over at least by a deformable cover (14; 15), whereby, on the other side of the cover (14; 15), a hollow space is situated that permits an extensive deformation in the case of a head impact.

2. The cabriolet vehicle (1) according to Claim 1,
**characterised in that**
the cover (14; 15) includes a surface of at least 70 square centimetres which faces the passenger space (7).

3. The cabriolet vehicle (1) according to one of Claims 1 or 2,
**characterised in that**
two coverable recesses (9; 10) are provided symmetrically in relation to a vertical vehicle longitudinal centre plane (8).

4. The cabriolet vehicle (1) according to one of Claims 1 to 3,
**characterised in that**
a perpendicular (19; 20) of the outer surface(s) of the cover(s) (14; 15) respectively includes, at least over a partial area, a rearward-pointing and over a partial area, a downward-pointing component.

5. The cabriolet vehicle (1) according to one of Claims 1 to 4,
**characterised in that**
the recess(es) (9; 10) is or are each at least twenty-five centimetres wide and ten centimetres deep.

6. The cabriolet vehicle (1) according to one of Claims 1 to 5,
**characterised in that**
the covers (14; 15) in the calculated head impact area of the driver and/or passenger are situated at the portion (6) projecting into the passenger space (7) in the event of a potential head-on collision.

7. The cabriolet vehicle (1) according to one of Claims 1 to 6,
**characterised in that**
parts of the mechanism for locking the roof summit (6) at the windscreen frame (4), in particular lateral capturing hooks (12), can be mounted through the opened recesses (9; 10).

8. The cabriolet vehicle (1) according to one of Claims 1 to 7,
**characterised in that**
the cover(s) (14; 15) is or are each screwed to the roof summit (6a) with an end which is located at the front in the direction of travel (F) and which is applied to the windscreen frame (4) when the roof (2) is closed.

9. The cabriolet vehicle (1) according to one of Claims 1 to 8,
**characterised in that**
the cover(s) (14; 15) is or are releasably fittable at a rear end against the direction of travel (F) behind at least one projection (17) of the roof summit (6a).

10. The cabriolet vehicle (1) according to Claim 9,
**characterised in that**
a hold-down device (18) for the cover (14; 15) is arranged in front of the projection (17), which limits its high forces.

11. A movable vehicle roof (2) for a cabriolet vehicle (1) according to one of Claims 1 to 10.

## Revendications

1. Véhicule cabriolet (1) avec un toit (2) qui, à l'état fermé, comprend dans la région avant directement ou indirectement adjacente à un cadre de pare-brise (4) une partie (6) pénétrant plus loin dans l'habitacle (7) en face de régions du toit situées à l'arrière, **caractérisé en ce que** la partie (6) comprend, sur une face (11) tournée vers l'habitacle (7), au moins un évidement (9; 10) de grande étendue pouvant être au moins recouvert par une couverture déformable (14; 15), dans lequel il se trouve de l'autre côté de la couverture (14; 15) un espace creux qui permet une large déformation en cas d'impact d'une tête.

2. Véhicule cabriolet (1) selon la revendication 1, **caractérisé en ce que** la couverture (14; 15) comprend une surface d'au moins 70 centimètres carrés tournée vers l'habitacle (7).

3. Véhicule cabriolet (1) selon l'une quelconque des revendications 1 ou 2, **caractérisé en ce qu'**il comporte deux évidements (9; 10) recouvrables, symétriques par rapport à un plan central longitudinal (8) vertical du véhicule.

4. Véhicule cabriolet (1) selon l'une quelconque des revendications 1 à 3, **caractérisé en ce qu'**une perpendiculaire (19; 20) à la (aux) face(s) extérieure(s) de la (des) couverture(s) (14; 15) comporte chaque fois au moins une composante orientée vers l'arrière sur une zone partielle et une composante orientée vers le bas sur une zone partielle.

5. Véhicule cabriolet (1) selon l'une quelconque des revendications 1 à 4, **caractérisé en ce que** le (les) évidement(s) (9; 10) présente(nt) chaque fois une largeur d'au moins vingt-cinq centimètres et une profondeur d'au moins dix centimètres.

6. Véhicule cabriolet (1) selon l'une quelconque des revendications 1 à 5, **caractérisé en ce que** les couvertures (14; 15) sont situées dans la zone calculée de l'impact de la tête du conducteur et/ou du passager, dans le cas d'une collision frontale possible, sur la partie (6) pénétrant dans l'habitacle (7).

7. Véhicule cabriolet (1) selon l'une quelconque des revendications 1 à 6, **caractérisé en ce que** des pièces du verrouillage de la pointe du toit (6) sur le cadre de pare-brise (4), en particulier des crochets de retenue latéraux (12), peuvent être montées à travers les évidements ouverts (9; 10).

8. Véhicule cabriolet (1) selon l'une quelconque des revendications 1 à 7, **caractérisé en ce que** la (les) couverture(s) (14; 15) est ou sont vissée(s) à la pointe du toit (6a) chaque fois avec une extrémité avant dans la direction de déplacement (F), qui s'applique sur le cadre de pare-brise (4) lorsque le toit (2) est fermé.

9. Véhicule cabriolet (1) selon l'une quelconque des revendications 1 à 8, **caractérisé en ce que** la (les) couverture(s) (14; 15) peut ou peuvent être suspendue(s) de façon séparable à une extrémité arrière à l'opposé de la direction de déplacement (F), derrière au moins une saillie (17) de la pointe du toit (6a).

10. Véhicule cabriolet (1) selon la revendication 9, **caractérisé en ce qu'**un élément de retenue (18) pour la couverture (14; 15) est disposé devant la saillie (17), et empêche son soulèvement.

11. Toit mobile (2) de véhicule pour un véhicule cabriolet (1) selon l'une quelconque des revendications 1 à 10.
